Europäisches Patentamt

European Patent Office

Office européen des brevets

(11) Publication number: **0 104 713**

**B1**

(12) **EUROPEAN PATENT SPECIFICATION**

(45) Date of publication of patent specification: **27.07.88**

(51) Int. Cl.⁴: **F 25 B 21/00**

(21) Application number: **83303090.1**

(22) Date of filing: **27.05.83**

(54) **A magnetic refrigerator.**

(30) Priority: **31.08.82 JP 150903/82**
**31.08.82 JP 150939/82**

(43) Date of publication of application:
**04.04.84 Bulletin 84/14**

(45) Publication of the grant of the patent:
**27.07.88 Bulletin 88/30**

(84) Designated Contracting States:
**DE FR GB**

(56) References cited:
**CH-A- 519 149**
**DE-A-1 521 711**
**DE-A-1 771 359**
**US-A-2 913 881**
**US-A-3 125 861**
**US-A-3 393 526**
**US-A-3 598 178**
**US-A-3 841 107**
**US-A-4 332 135**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Nakagome, Hideki**
**3-327, Tsurumimachi-Daini-danchi 2-10,**
**Tsurumichuo**
**Tsurumi-ku Yokohama-shi (JP)**
Inventor: **Yasuda, Satoshi**
**1-16, Shiei 2008 Nakanoshima**
**Tama-ku Kawasaki-shi (JP)**
Inventor: **Sato, Akio**
**998-10-502, Hiyoshihoncho Kohoku-ku**
**Yokohama-shi (JP)**

(74) Representative: **Freed, Arthur Woolf et al**
**MARKS & CLERK 57-60 Lincoln's Inn Fields**
**London WC2A 3LS (GB)**

Courier Press, Leamington Spa, England.

**0 104 713**

(56) References cited:
CRYOGENICS, Vol. 21, October 1981, pages
579-584; IPC Business Press Ltd.; Guildford, GB
C. DELPUECH et al.: "Double acting
reciprocating magnetic refrigerator: first
experiments."
JOURNAL OF THE ELECTROCHEMICAL
SOCIETY: SOLID-STATE SCIENCE AND
TECHNOLOGY, vol. 120, no. 5, May 1973, pages
678-685; Princeton, US D.C. MILLER: "Defects
in garnet substrates and epitaxial magnetic
garnet films revealed by phosphoric acid
etching."
WESTERN ELECTRIC, TECHNICAL DIGEST, no.
18, April 1970, page 1; New York. E.G. ADAMS:
"Phosphoric acid etching of titanium."
JOURNAL OF CRYSTAL GROWTH, vol. 27,
1974, pages 274-281; North-Holland Publishing
Co., Amsterdam, NL. D.C. Miller et al.: "Stress
relief in magnetic garnet films grown by liquid
phase epitaxy."
INTERNATIONAL METALLURGICAL REVIEWS,
vol. 20, no. 194, March 1975, pages 29-55;
London, GB J.W. DINI: "Chemical milling."
DUNN and REAY "Heat pipes". Pergamon Press
1978, p. 209-211

## Description

This invention relates to a magnetic refrigerator using a working material which radiates heat when it is magnetized and absorbs heat when it is demagnetized.

Magnetic refrigerators are based on the well-known phenomenon that working materials consisting of rare-earth metal compounds, such as gadolinium-gallium-garnet ($Gd_3Ga_5O_{12}$, abbreviated GGG), or alloys, such as an alloy of erbium and nickel, radiate heat when they are magnetized and absorb heat when they are demagnetized. The temperature of the working material is lowered by adiabatic demagnetization. The working material lowered in temperature extracts heat from an object to cool it. These magnetic refrigerators have an advantage over conventional gas refrigerators in having improved refrigerating capacity per unit volume of the object for cooling.

The magnetic refrigerators require two heat exchanging processes to be executed alternately; a heat discharging process for discharging heat generated from a magnetic material or working material by adiabatic magnetization, and a heat absorption process for extracting heat from the object by means of the working material cooled by adiabatic demagnetization. To obtain a high-efficiency refrigerating cycle through the two alternating heat exchanging processes, it is necessary to securely prevent heat transfer from the working material to the object in the heat discharging process, and to quickly transfer heat from the object to the working material in the heat absorption process.

The refrigerating efficiency also depends on the time required for heat exchange, that is, for heat absorption and heat discharging. Therefore, the magnetic material or working material for magnetic refrigeration requires not only great magnetic moment but also high thermal conductivity within the working temperature range of the refrigerator.

The working materials are generally manufactured by cutting and shaping lumps of magnetic material. The thermal conductivity of the working materials normally tends to increase as the temperature is lowered, peaking at 10°K to 40°K, and to decrease as the temperature is lowered further. The thermal conductivity on the lower-temperature side of the peak value range varies with the surface condition of the working material, and will be reduced if work distortion remains on the surface. In order to operate the magnetic refrigerator with high refrigerating efficiency in a very low temperature range, therefore, it is necessary to use a working material free from work distortion. However, it has conventionally been difficult to remove such work distortion on the surface of the working material.

US—A—2 913 881 discloses a magnetic generator having a working material which radiates heat when magnetised and absorbs heat when demagnetised, magnetic field generating means for selectively applying or removing a magnetic field to or from the working material, and heat absorbing means for absorbing the heat radiated from a working material when the working material is magnetised.

US—A—3 598 178 has an internal annular cylindrical space defined by an inner cylindrical wall and an outer cylindrical wall.

An object of this invention is to provide a magnetic refrigerator having a heat pipe and to ensure that the transmission efficiency of the heat is as high as possible.

According to this invention, there is provided a magnetic refrigerator for cooling an object for cooling, comprising:

a working material which radiates heat when magnetised and absorbs heat when demagnetised and in the form of a solid cylinder positioned vertically;

magnetic field generating means for selectively applying or removing a magnetic field to or from the working material; and

heat absorbing means for absorbing the heat radiated from the working material when the working material is magnetised;

characterised by comprising:

at least one heat pipe disposed between the working material and the object for cooling and having an internal space therein through which heat is transferred from the object for cooling to the working material, in that the outer peripheral surface of the working material defines the internal space by forming part of the wall of the heatpipe at the working material side end portion of the heat pipe, and in that internal space of the heat pipe is an annular cylindrical space surrounding the working material, whereby the peripheral surface of the working material in contact with the internal space functions as a condensing surface of the heat pipe.

According to this invention, the directional heat pipe is disposed between the working material and the object for cooling, and functions as a thermoswitch to allow heat to be transferred from the object to the working material but prevents heat transfer from the latter to the former for higher refrigerating efficiency. Since the internal space of the heat pipe is directly in contact with part of the surface of the working material, a heat medium in the heat pipe directly touches the surface of the working material. Namely, the part of the surface of the working material serves as a condensing surface of the heat pipe, so that heat loss at the condensing surface is smaller than in the conventional heat pipe. Thus, the working material can cool the heat medium with high efficiency when it is adiabatically demagnetised. The working material is cylindrical, and the heat pipe is formed in a hollow cylinder so that part or the whole of the peripheral surface of the working material serves as the condensing surface of the heat pipe, thus providing a wide condensing surface. In this case, the thickness of the cylindrical space of the heat pipe is set to 200 to 500 microns, so that the heat medium is further restrained from moving to transfer heat from the working material to the object when the working material is adiabatically magnetised. Thus, the refrigerating efficiency of the magnetic refrigerator can be improved. According to this invention, moreover, the magnetic refrigerator does not require a transfer mechanism for the working material, and is therefore simple in construction.

The use of a heat pipe as a thermal switch is known from the Text Book "Heat Pipes" by Dunn and Reay, Pergman Press 1978, pages 209 to 211.

This invention can be more fully understood from the following detailed description when taken in conjunction with the accompanying drawings, in which:

Fig. 1 is a cut away, perspective view of a magnetic refrigerator according to a first embodiment of this invention;

Fig. 2 is a cut away, perspective view of a magnetic refrigerator according to a second embodiment of the invention; and

Fig. 3 is a graph showing the thermal conductivity of working materials for magnetic refrigeration.

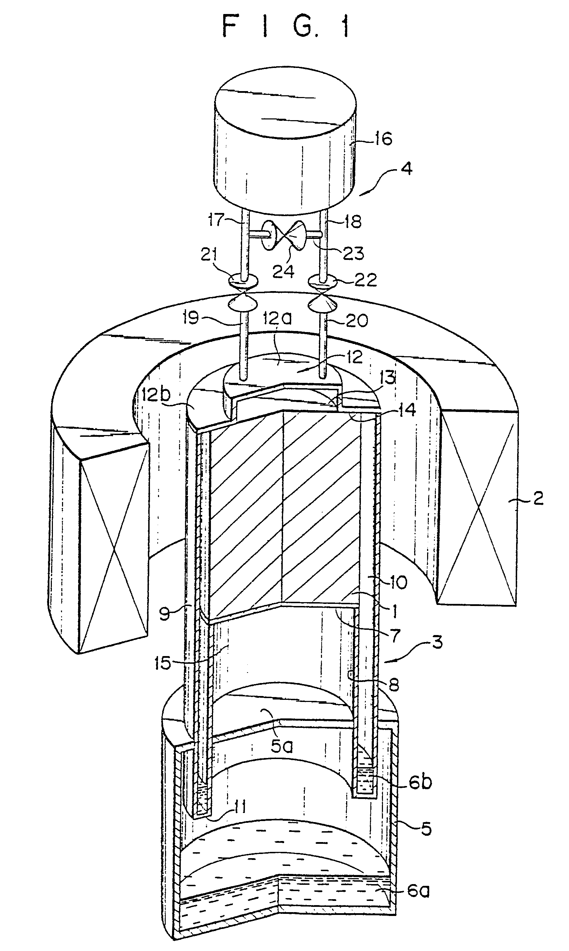

Fig. 1 shows a magnetic refrigerator according to one embodiment of this invention. This magnetic refrigerator is used for helium cooling, and comprises a working material 1, a superconductive coil 2, a heat pipe 3, and a heat absorbing means 4 which are located above a reservoir 5 storing helium as the object to be cooled. The working material 1, the superconductive coil 2, the heat pipe 3, and the reservoir 5 are housed in a vacuum container (not shown) and kept in a vacuum.

The reservoir 5 is in the form of a cylinder having top and bottom walls. Part of the helium is stored as liquid helium 6a in the reservoir 5, while the remaining part is hermetically kept as gaseous helium in the reservoir 5.

The working material 1 is in the form of a cylinder, and is laid on a discoid bed plate 7 so that its longitudinal direction is vertical. The working material 1 is obtained by cutting a lump of magnetic material, such as gadolinium-gallium-garnet (GGG), an alloy of erbium and nickel, $Dy_3Al_5O_{12}$, $Gd_3Al_5O_{12}$, $GdPO_4$, or $Dy_2Ti_2O_7$. After the cutting work, the resultant cylindrical body is preferably etched in an aqueous solution of phosphoric acid at approximately 160°C. By this etching process, a work distortion layer on the surface of the cylindrical body is removed to improve the thermal conductivity of the working material 1. The working material 1 radiates heat when magnetized and absorbs heat when demagnetized.

The heat pipe 3 includes coaxial inner and outer cylinders 8 and 9. The inner cylinder 8 has the same outside diameter as the diameter of the working material 1. The upper end of the inner cylinder 8 is hermetically fixed to the peripheral edge of the bed plate 7. The outer cylinder 9 is disposed coaxially with the inner cylinder 8 so as to face the respective peripheral surfaces of the working material 1 and the inner cylinder 8 at a space of approximately 200 to 500 microns therefrom. Each of the lower ends of the outer and inner cylinders 9 and 8 is hermetically fixed to a ring-shaped bottom plate 11. A hat-shaped top plate 12 includes a projected central portion 12a in the center and a collar portion 12b around the same. The upper end of the outer cylinder 9 is hermetically fixed to the peripheral edge of the collar portion 12b. Part of the lower surface of the collar portion 12b is laid on the top face of the working material 1, and a sealing member 14 is interposed between them. An internal space 10 of the heat pipe 3 is defined in the region where the inner peripheral surface of the outer cylinder 9 faces the outer peripheral surface of the inner cylinder 8 and the peripheral surface of the working material 1. Thus, the internal space 10 is directly in contact with the peripheral surface of the working material 1 so that the latter functions as a condensing surface of the heat pipe 3. The internal space 10 is sealed up by the sealing member 14. Helium gas is sealed in the internal space 10, and liquid helium 6b exists at the bottom portion of the internal space 10. The lower portions of the inner and outer cylinders 8 and 9 are located in the internal space of the reservoir 5, penetrating a top plate 5a of the reservoir 5. The inner and outer cylinders 8 and 9 are hermetically fixed to the top plate 5a. A space 15 defined by the bed plate 7, the inner cylinder 8, and the top plate 5a is kept in a vacuum so that heat is prevented from being transferred from the reservoir 5 to the working material 1. The top plate 12, the outer and inner cylinders 9 and 8, and the bed plate 7 are made of a nonmagnetic material or materials. Some of these members may be formed integrally. Alternatively, these may be manufactured by joining different materials together. More specifically, the heat exchanging capability of the heat pipe 3 can be improved by forming those portions of the inner and outer cylinders 8 and 9 which are located inside the reservoir 5 from a material with high thermal conductivity and those portions of the cylinders 8 and 9 outside the reservoir 5 from a material with low thermal conductivity.

The superconductive coil 2 is disposed concentrically with the working material 1 at a suitable distance from the outer cylinder 9 so as to surround the working material 1. The superconductive coil 2 is kept at a very low temperature, and is intermittently supplied with current from a suitable power source (not shown). Thus, the working material 1 is repeatedly magnetized and demagnetized by the coil 2.

A cooling space 13 sealed by the sealing member 14 is defined between the central portion 12a of the top plate 12 and the top face of the working material 1. The heat absorbing means 4 to absorb heat from the working material 1 includes a miniature hydrogen refrigerator unit 16 located over the top plate 12. The hydrogen refrigerator unit 16 itself is a conventional type, and produces helium gas at a temperature of 20°K or below. The refrigerator unit 16 has an outlet pipe 17 for supplying the helium gas as a refrigerant and an inlet pipe 18 for returning the helium gas to the refrigerator unit 16. Valves 21 and 22 for switching are provided at the extreme ends of the outlet and inlet pipes 17 and 18, respectively. Pipes 19 and 20 connect the cooling space 13 inside the top plate 12 with the valves 21 and 22, respectively. A by-pass pipe 23 connects the outlet and inlet pipes 17 and 18, and a valve 24 for switching is disposed in the middle of the pipe 23. Thus, when the valves 21 and 22 are closed while the valve 24 is open, then the helium gas from the refrigerator unit 16 circulates through the outlet pipe 17, the pipe 23, and the inlet pipe 18. When the valves 21 and 22 are open while the valve 24 is closed, on the other hand, the helium gas from the refrigerator unit 16 circulates through the outlet pipe 17, pipe 19, cooling space 13, pipe 20, and inlet pipe 18. At this time, the heat of the working material 1 is extracted by the helium gas flowing through the cooling space 13. Accordingly, if the working material 1 generates heat, the generated heat is discharged through the medium of the helium gas to restrain the temperature of the working material 1 from rising.

There will now be described the operation of the refrigerator constructed in this manner, along with the switching operation of the valves 21, 22 and 24 and energization of the coil 2. First, the valves 21 and 22 are closed, and the valve 24 is opened. Thus, the hydrogen refrigerator unit 16 is actuated to cause the helium gas at 20°K or below to circulate through the outlet pipe 17, pipe 23, and inlet pipe 18. Since the coil 2, working material 1, heat pipe 3, and reservoir 5 are housed in the vacuum container, they are kept in an adiabatic condition, thermally disconnected from the outside.

The superconductive coil 2 is energized, then the valves 21 and 22 are opened, and the valve 24 is closed. The working material 1 is adiabatically magnetized by the coil 2 to radiate heat. This heat is extracted from the top face of the working material 1 by the helium gas at 20°K or below flowing through the cooling space 13, and is discharged together with the helium gas. Thus, the temperature of the working material 1 is prevented from being increased by the adiabatic magnetization.

Subsequently, the valve 24 is opened, the valves 21 and 22 are closed, and the current supply to the coil 2 is stopped. As a result, application of the magnetic field to the working material 1 is interrupted to adiabatically demagnetize the working material 1, so that the temperature of the working material 1 is lowered rapidly. When the temperature of the working material 1 is lowered to the temperature of liquefaction of helium gas, i.e., 4.2°K or below, the helium gas in the internal space 10 of the heat pipe 3 is cooled to be liquefied, and condenses on the peripheral surface of the working material 1. Drops of the condensed liquid helium are cooled to a temperature below 4.2°K, and fall into the space 10 of the heat pipe 3 to be stored as the liquid helium 6b at the lower portion of the heat pipe 3. The helium gas in the reservoir 5 is cooled by that portion of the heat pipe 3 which is located inside the reservoir 5 and stores the liquid helium 6b. The helium gas in the reservoir 5 is cooled and liquefied, and condenses on the outer surface of the heat pipe 3 inside the reservoir 5. Drops of the condensed helium fall into the reservoir 5 to be stored therein as the liquid helium 6a. Accordingly, the helium gas in the helium reservoir 5 is cooled and liquefied by the heat pipe 3. Thus, heat is transferred in one direction from the reservoir 5 toward the working material 1 through the heat pipe 3.

Thereafter, the superconductive coil 2 is energized, the valves 21 and 22 are opened, and valve 24 is closed. The working material 1 is adiabatically magnetized by the coil 2, and is cooled by the heat absorbing means 4. Then, the valve 24 is opened, the valves 21 and 22 are closed, and the current supply to the coil 2 is stopped. As a result, the working material 1 is adiabatically demagnetized and cooled rapidly. Heat is transmitted from the reservoir 5 to the working material 1 through the space 10 of the heat pipe 3. The adiabatic magnetization and demagnetization of the working material 1 are repeated, and the helium gas and the liquid helium 6a in the reservoir 5 as the objects for cooling are cooled.

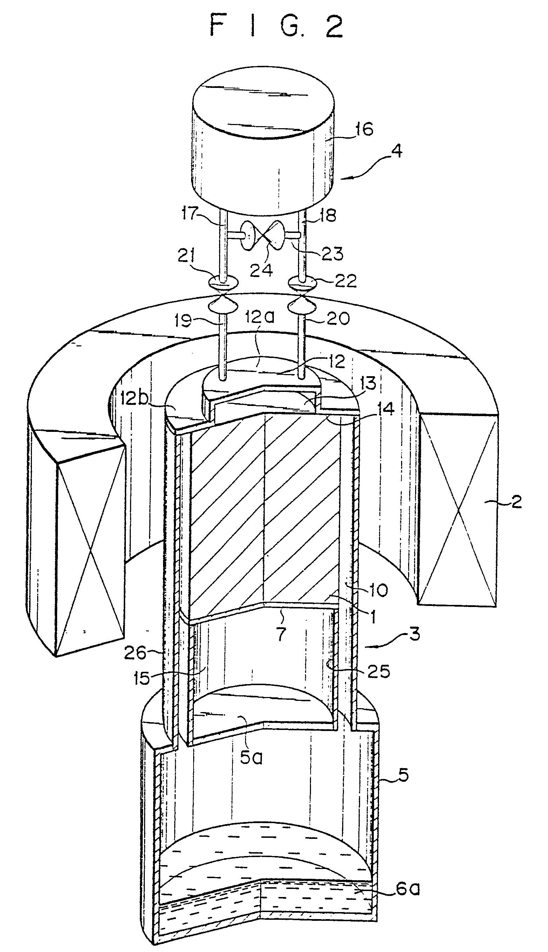

Fig. 2 shows a magnetic refrigerator according to another embodiment of this invention. In Fig. 2, like reference numerals are used to designate like portions shown in Fig. 1. A heat pipe 3 of this second embodiment differs from the heat pipe 3 shown in Fig. 1 in that it communicates with the interior of a reservoir 5 as the object for cooling. The lower ends of outer and inner cylinders 26 and 25 of the heat pipe 3 are fixed to a top plate 5a of the reservoir 5. The inner cylinder 25 or the top plate 5a is supported by a suitable support means (not shown). Accordingly, an internal space 10 of the heat pipe 3 is connected to the internal space of the reservoir 5. In this embodiment, helium gas or liquid helium 6a in the reservoir 5 is cooled by the same operation as in the embodiment shown in Fig. 1. According to the second embodiment, the helium gas in the reservoir 5 as the object is cooled directly by the working material 1, so that the process of heat exchange between the heat transfer medium in the heat pipe 3 and the object is unnecessary. Thus, the refrigerating efficiency of the refrigerator can further be improved.

There will now be described a method for manufacturing working material for the magnetic refrigerator. Such a method is claimed in the divisional application EP—A—0 223 265. A cylindrical block is cut from a lump of magnetic material, such as GGG (gadolinium-gallium-garnet, $Gd_3Ga_5O_{12}$), $Dy_3Al_5O_{12}$, $Gd_3Al_5O_{12}$, $GdPO_4$ or $Dy_2Ti_2O_7$, and its surface is lapped. This block is immersed in an aqueous solution of phosphoric acid kept at approximately 160°C, and is etched to be cleared of a surfaec layer with a thickness of approximately 50 to 60 microns. In this manner, a work distortion layer on the surface of the block can be removed easily and securely without complicating the manufacturing process. Thus, a working material for magnetic refrigeration with high thermal conductivity can be manufactured with ease.

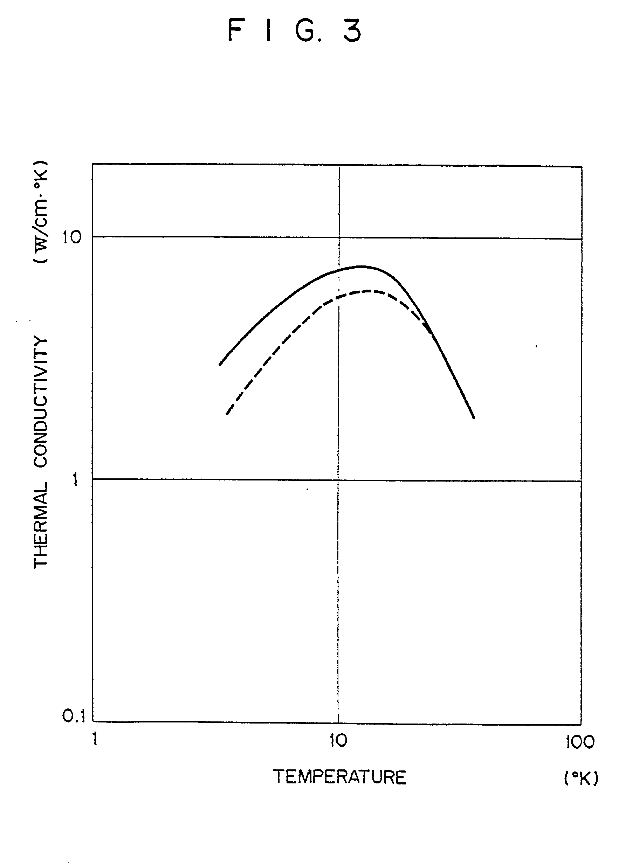

Fig. 3 shows the temperature-induced variation of the thermal conductivity of the working material at very low temperature. In Fig. 3, a full line represents the thermal conductivity of a sample of the working material cleared of the surface work distortion layer by etching, while a broken line represents that of another sample only lapped. As seen from Fig. 3, the thermal conductivity (full line) of the etched working material is much higher than that (broken line) of the unetched working material especially in a temperature range of 20°K and below. Thus, the very-low-temperature refrigerating efficiency of the magnetic refrigerator may be improved by the use of the working material cleared of the surface work distortion layer.

It is to be further understood by those skilled in the art that the foregoing description is for the purpose of illustrating only preferred embodiments of the invention, and that various changes and modifications may be made in the invention without departing from the spirit and scope thereof. In particular, the heat absorbing means 4 is not limited to the construction of the aforementioned embodiments in which a refrigerant (helium gas) is circulated over the top face of the working material 1 for contact cooling. For example, the magnetic refrigerator may use a heat pipe for the heat absorbing means. In this case, the condensing section of the heat pipe 3 for cooling the helium gas in the reservoir 5 is provided at the lower half portion of the peripheral surface of the working material 1, while the evaporating section of the heat pipe of the heat absorbing means 4 is provided at the upper half portion of the peripheral surface of the working material 1. The object for cooling is not limited to the gaseous body which was used in the foregoing embodiments. For example, a solid object may be cooled by bringing it into contact with the lower end portion of the heat pipe 3 according to the first embodiment. The heat pipe 3 need not always be cylindrical. Moreover, the heat pipe 3 need not always be so positioned as to extend vertically, and may be positioned in a slanting manner.

In the above embodiments, the working material 1 is magnetized or demagnetized by energizing or deenergizing the superconductive coil 2. Alternatively, the working material 1 may be placed in or removed from a magnetic field by periodically moving the energized coil 2 in its axial direction. Various other means than the superconductive coil may be used for applying the magnetic field to the working material 1.

**Claims**

1. A magnetic refrigerator for cooling an object for cooling, comprising:
   a working material (1) which radiates heat when magnetized and absorbs heat when demagnetized and is in the form of a solid cylinder positioned vertically;
   magnetic field generating means (2) for selectively applying or removing a magnetic field to or from the working material; and
   heat absorbing means (4) for absorbing the heat radiated from the working material when the working material is magnetized;
   characterized by comprising:
   at least one heat pipe (3) disposed between the working material and the object for cooling and having an internal space (10) therein through which heat is transferred from the object for cooling to the working material, in that the outer peripheral surface of the working material (1) defines the internal space by forming part of the wall of the heat pipe at the working material side end portion of the heat pipe, and in that the internal space (10) of the heat pipe (3) is an annular cylindrical space surrounding the working material (1) whereby the peripheral surface of the working material (1) in contact with the internal space (10) functions as a condensing surface of the heat pipe (3).

2. A magnetic refrigerator according to claim 1, characterized in that said heat pipe (3) includes an inner cylinder (8, 25) having the same outside diameter as the diameter of the working material (1) and disposed coaxially with the working material (1) thereunder, and an outer cylinder (9, 26) disposed coaxially with the working material (1) so as to face at least part of the peripheral surface of the working material (1) and the inner cylinder (8, 25) at a space therefrom, and said internal space (10) is defined by the inner and outer cylinders (8, 25; 9, 26) and the peripheral surface of the working material (1) facing the outer cylinder (9, 26).

3. A magnetic refrigerator according to claim 2, characterized in that said heat pipe (3) includes a bottom plate (11) hermetically fixed to the lower ends of the inner and outer cylinders (8; 9), a top plate (12) hermetically closing the upper end of the outer cylinder (9) to the working material (1), and a heat medium sealed in the internal space (10).

4. A magnetic refrigerator according to claim 2, characterized in that said object for cooling includes a reservoir (5) which stores a medium to be cooled and which is connected with the internal space (10) of the heat pipe (3), said medium directly touching the peripheral surface of the working material (1) to be cooled thereby.

5. A magnetic refrigerator according to claim 1, characterized in that said heat absorbing means (4) includes a refrigerator unit (16) for cooling a cooling medium and circulating means for circulating the medium over the top face of the working material (1), so that heat generated from the working material (1) is removed by the cooling medium.

6. A magnetic refrigerator according to claim 5, characterized in that said top plate (12) is hat-shaped, and includes a projected central portion (12a) and a collar portion (12b) around the same, part of the under surface of the collar portion (12b) lying on the top face of the working material (1) and the peripheral edge of the collar portion (12b) being hermetically fixed to the upper end of the outer cylinder (9, 26), whereby the central portion (12a) and the top face of the working material (1) define a cooling space (13) through which the cooling medium circulates.

7. A magnetic refrigerator according to claim 6, characterised in that said cooling medium is supplied to the cooling space (13) when the working material (1) is magnetised and is stopped from being supplied to the cooling space (13) when the working material (1) is demagnetized.

8. A magnetic refrigerator according to claim 1, characterised by further comprising a space (15) defined by the working material, the object for cooling and the heat pipe (3) and kept at a vacuum.

## Patentansprüche

1. Magnetischer Kühler zum Kühlen eines Objekts für Kühlung bzw. zu kühlenden Objekts, umfassend

ein Arbeitsmaterial (1), das bei Magnetisierung Wärme abstrahlt und bei Entmagnetisierung Wärme absorbiert und das in Form eines lotrecht angeordneten Zylinders vorliegt,

eine Magnetfelderzeugungseinheit (2) zum selektiven Anlegen oder Entfernen eines Magnetfelds an das bzw. vom Arbeitsmaterial und

eine Wärmeabsorbiereinheit (4) zum Absorbieren der vom Arbeitsmaterial, wenn dieses magnetisiert ist, abgestrahlten Wärme,

dadurch gekennzeichnet, daß

zwischen dem Arbeitsmaterial und dem zu kühlenden Objekt mindestens ein Wärmerohr (3) mit einem darin festgelegten Innenraum (10), durch den Wärme vom zu kühlenden Objekt zum Arbeitsmaterial übertragen wird, angeordnet ist, daß die Außenumfangsfläche des Arbeitsmaterials (1) den Innenraum definiert, indem sie einen Teil der Wand des Wärmerohrs am arbeitsmaterialseitigen Endabschnitt des Wärmerohrs bildet, und daß der Innenraum (10) des Wärmerohrs (3) ein das Abeitsmaterial (1) umgebender, ringförmig zylindrischer Raum ist, wobei die mit dem Innenraum (10) in Berührung stehende Umfangsfläche des Arbeitsmaterials (1) als Kondensierfläche des Wärmerohrs (3) wirkt.

2. Magnetischer Kühler nach Anspruch 1, dadurch gekennzeichnet, daß das Wärmerohr (3) einen Innenzylinder (8, 25), der den gleichen Außendurchmesser wie der Durchmesser des Arbeitsmaterials (1) besitzt und der koaxial zum Arbeitsmaterial (1) darunter angeordnet ist, und einen Außenzylinder (9, 26) aufweist, der koaxial zum Arbeitsmaterial (1) so angeordnet ist, daß er zumindest einem Teil der Umfangsfläche des Arbeitsmaterials (1) und des Innenzylinders (8, 25) mit einem Abstand dazu zugewandt ist, und daß der Innenraum (10) durch Innen- und Außenzylinder (8, 25; 9, 26) und die dem Außenzylinder (9, 26) zugewandte Umfangsfläche des Arbeitsmaterials (1) festgelegt oder definiert ist.

3. Magnetischer Kühler nach Anspruch 2, dadurch gekennzeichnet, daß das Wärmerohr (3) eine luftdicht an den unteren Enden von Innen- und Außenzylinder (8; 9) befestigte Bodenplatte (11), eine das obere Ende des Außenzylinders (9) zum Arbeitsmaterial (1) (hin) luftdicht verschließende obere Platte (12) und ein in den Innenraum (10) dicht eingeschlossenes Wärmemedium aufweist.

4. Magnetischer Kühler nach Anspruch 2, dadurch gekennzeichnet, daß das zu kühlende Objekt einen Speicherbehälter (5) aufweist, der ein zu kühlendes Medium speichert und der mit dem Innenraum (10) des Wärmerohrs (3) verbunden ist, wobei dieses medium in unmittelbarer Berührung mit der Umfangsfläche des Arbeitsmaterials (1) steht, um dadurch gekühlt zu werden.

5. Magnetischer Kühler nach Anspruch 1, dadurch gekennzeichnet, daß die Wärmeabsorbiereinheit (4) eine Kühlereinheit (16) zum Kühlen eines Kühlmediums und eine Umwälzeinheit zum Umwälzen des Mediums über die Oberseite des Arbeitsmaterials (1) aufweist, so daß die vom Arbeitsmaterial (1) erzeugte Wärme durch das Kühlmedium abgeführt wird.

6. Magnetischer Kühler nach Anspruch 5, dadurch gekennzeichnet, daß die obere Platte (12) hutförmig ausgebildet ist und einen vorstehenden (hochragenden) zentralen Abschnitt (12a) sowie einen diesen umgebenden Kragen- oder Flanschabschnitt (12b) aufweist, ein Teil der Unterseite des Flanschabschnitts (12b) auf der Oberseite des Arbeitsmaterials (1) (auf)liegt und die Umfangskante des Flanschabschnitts (12b) luftdicht am oberen Ende des Außenzylinders (9, 26) befestigt ist, wobei der zentrale Abschnitt (12a) und die Oberseite des Arbeitsmaterials (1) einen Kühlraum (13) festlegen, durch den das Kühlmedium zirkuliert.

7. Magnetischer Kühler nach Anspruch 6, dadurch gekennzeichnet, daß das Kühlmedium zum Kühlraum (13) zugeführt wird, wenn das Arbeitsmaterial (1) magnetisiert ist, und seine Zufuhr zum Kühlraum (13) beendet wird, wenn das Arbeitsmaterial (1) entmagnetisiert ist.

8. Magnetischer Kühler nach Anspruch 1, dadurch gekennzeichnet, daß weiterhin ein durch das Arbeitsmaterial, das zu kühlende Objekt und das Wärmerohr (3) festgelegter und unter einem Vakuum gehaltener Raum (15) vorgesehen ist.

## Revendications

1. Réfrigérateur magnétique destiné au refroidissement d'un objet à refroidir, comprenant:

un matériau (1) de travail qui rayonne de la chaleur lorsqu'il est aimanté et absorbe de la chaleur lorsqu'il est désaimanté, et qui est sous forme d'un cylindre plein disposé verticalement,

un dispositif (2) générateur d'un champ magnétique destiné à appliquer un champ magnétique au matériau de travail ou à supprimer un tel champ magnétique du matériau de travail, sélectivement, et,

un dispositif (4) d'absorption de la chaleur rayonnée par le matériau de travail lorsque celui-ci est aimanté,

caractérisé en ce qu'il comprend:

au moins un caloduc (3) placé entre le matériau de travail et l'objet à refroidir et ayant un espace interne (10) par lequel de la chaleur est transférée de l'objet à refroidir au matéruau de travail, en ce que la surface périphérique externe du matériau de travail (1) délimite un espace interne par formation d'une partie de la paroi du caloduc dan sa partie d'extrémité du caloduc qui est plàce du côté du matériau de travail, et en ce que l'espace interne (10) du caloduc (3) est un espace cylindrique annulaire entourant le matériau de travail (1), si bien que la surface périphérique du matériau (1) de travail qui est au contact de l'espace interne (10) joue le rôle d'une surface de condensation du caloduc (3).

2. Réfrigérateur magnétique selon la revendication 1, caractérisé en ce que le caloduc (3) comporte un cylindre interne (8, 25) ayant le même diamètre externe que le matériau (1) de travail et disposé coaxialement à ce matériau (1) de travail et sous celui-ci, et un cylindre externe (9, 26) disposé coaxialement au matériau de travail (1) afin qu'il soit en face d'une partie au moins de la surface périphérique du matériau (1) de travail et du cylindre interne (8, 25), avec un espace qui l'en sépare, et l'espace interne (10) est délimité par les cylindres interne et externe (8, 25; 9, 26) et la surface périphérique du matériau (1) de travail qui est tournée vers le cylindre externe (9, 26).

3. Réfrigérateur magnétique selon la revendication 2, caractérisé en ce que le caloduc (3) comporte une plaque inférieure (11) fixée hermétiquement aux extrémités inférieures des cylindres internes et externe (8; 9), une plaque supérieure (12) fermant hermétiquement l'extrémité supérieure du cylindre externe (9) contre le matériau (1) de travail, et un fluide thermique enfermé de manière étanche dans l'espace interne (10).

4. Réfrigérateur magnétique selon la revendication 2, caractérisé en ce que l'objet à refroidir comporte un réservoir (5) qui contient un fluide à refroidir et qui est relié à l'espace interne (10) du caloduc (3), le fluide étant directement au contact de la surface périphérique du matériau (1) de travail afin qu'il soit refroidi par celui-ci.

5. Réfrigérateur magnétique selon la revendication 1, caractérisé en ce que le dispositif (4) d'absorption de chaleur comporte un ensemble réfrigérateur (16) destiné à refroidir un fluide de refroidissement et un dispositif destiné à faire circular le fluide sur la face supérieure du matériau (1) de travail, si bien que la chaleur dégagée par le matériau (1) de travail est extraite par le fluide de refroidissement.

6. Réfrigérateur magnétique selon la revendication 5, caractérisé en ce que la plaque supérieure (12) a une forme de chapeau et comprend une partie centrale (12a) en saillie et une partie de collerette (12b) placée autour de la partie précédente, une portion de la face inférieure de la partie de collerette (12b) étant disposée contre la face supérieure du matériau (1) de travail et le bord périphérique de la partie de collerette (12b) étant fixé hermétiquement à l'extrémité supérieure du cylindre externe (9, 26), si bien que la partie centrale (12a) et la face supérieure du matériau (1) de travail délimitent un espace (13) de refroidissement par lequel circule le fluide de refroidissement.

7. Réfrigérateur magnétique selon la revendication 6, caractérisé en ce que le fluide de refroidissement est transmis à l'espace (13) de refroidissement lorsque le matériau (1) de travail est aimanté et n'est plus transmis à l'espace (13) de refroidissement lorsque le matériau (1) de travail est désaimanté.

8. Réfrigérateur magnétique selon la revendication 1, caractérisé en ce qu'il comprend en outre un espace (15) délimité par le matériau de travail, l'objet à refroidir et le caloduc (3), et maintenu sous vide.

# F I G. 1

F I G. 2

# F I G. 3